# EUROPEAN PATENT APPLICATION

(11) **EP 4 704 400 A1**
(43) Date of publication of application: **04.03.2026**
(21) Application number: 23951105.8
(22) Date of filing: 05.09.2023
(51) Int. Cl.: H04L 45/645

(54) **DATA PACKET TRANSMISSION METHOD AND NETWORK DEVICE**

(71) Applicant: New H3C Technologies Co., Ltd., Hangzhou, Zhejiang 310052 (CN)
(72) Inventor: GUO, Daorong, Beijing 100102 (CN)
(74) Representative: Bandpay & Greuter
(86) International application number: PCT/CN2023/116919
(87) International publication number: WO 2025/050276

(57) **Abstract**

The present disclosure provides a data packet transmission method and a network device. The method includes: sending, by the master control unit, an information synchronization packet to a master output interface unit and a target slave output interface unit; after receiving the information synchronization packet, writing, by the master output interface unit, a master sequence number into a master synchronization sequence number register; after receiving the information synchronization packet, writing, by the target slave output interface unit, a salve sequence number into a slave synchronization sequence number register; reading, by the master control unit, the master sequence number and the slave sequence number, and writing a target difference between the master sequence number and the slave sequence number into a distance register corresponding to the flow identifier of the target slave output interface unit; based on a start sequence number corresponding to the flow identifier and the target difference in the distance register, adding, by the target slave output interface unit, a target sequence number to a data packet corresponding to the flow identifier and sending a modified data packet. In the technical solutions of the present disclosure, it is guaranteed that the sequence number of the data packet of the master output interface unit is consistent with the sequence number of the data packet of the slave output interface unit.

## Description

### TECHNICAL FIELD

The present disclosure relates to the field of communication technologies and in particular to a data packet transmission method and a network device.

### BACKGROUND

Deterministic network (DetNet) may provide deterministic service functions for bearer services within one network domain, and these deterministic service functions may include delay, a packet loss rate and the like. A Time Sensitive Networking (TSN) is a DetNet realized based on a local area network. In a TSN, deterministic transmission at a forwarding plane is guaranteed by using Cyclic Queuing and Forwarding (CQF), so as to provide deterministic service functions for the bearer services.

For ease of descriptions, service flows with deterministic service functions (e.g., delay, a packet loss rate and the like) transmitted in a DetNet are referred to as deterministic flows. For other flows than the deterministic flows, the best-effort forwarding manner may be adopted. Thus, other service flows different from the deterministic flows are referred to as best-effort flows.

### SUMMARY

The present disclosure provides a data packet transmission method, which is applied to a network device. The network device includes a master control unit and at least two output interface units. The at least two output interface units include one master output interface unit and at least one slave output interface unit. The method includes:
sending, by the master control unit, an information synchronization packet to the master output interface unit and a target slave output interface unit, where the information synchronization packet includes a flow identifier of a deterministic flow;
after receiving the information synchronization packet, writing, by the master output interface unit, a master sequence number into a master synchronization sequence number register corresponding to the flow identifier, where the master sequence number is a sequence number of a last data packet received by the master output interface unit; after receiving the information synchronization packet, writing, by the target slave output interface unit, a salve sequence number into a slave synchronization sequence number register corresponding to the flow identifier, where the slave sequence number is a sequence number of a last data packet received by the target slave output interface unit;
reading, by the master control unit, the master sequence number from the master synchronization sequence number register, reading the slave sequence number from the slave synchronization sequence number register, and writing a target difference between the master sequence number and the slave sequence number into a distance register, corresponding to the flow identifier, of the target slave output interface unit;
based on a start sequence number corresponding to the flow identifier and the target difference in the distance register, adding, by the target slave output interface unit, a target sequence number to a data packet corresponding to the flow identifier, and sending a modified data packet, where the start sequence number is a sequence number of a received last data packet.

The present disclosure provides a network device, which includes a master control unit and at least two output interface units; the at least two output interface units include one master output interface unit and at least one slave output interface unit;
the master control unit is configured to send an information synchronization packet to the master output interface unit and a target slave output interface unit, where the information synchronization packet includes a flow identifier of a deterministic flow;
the master output interface unit is configured to, after receiving the information synchronization packet, write a master sequence number into a master synchronization sequence number register corresponding to the flow identifier, where the master sequence number is a sequence number of a last data packet received by the master output interface unit;
the target slave output interface unit is configured to, after receiving the information synchronization packet, write a salve sequence number into a slave synchronization sequence number register corresponding to the flow identifier, where the slave sequence number is a sequence number of a last data packet received by the target slave output interface unit;
the master control unit is configured to read the master sequence number from the master synchronization sequence number register, read the slave sequence number from the slave synchronization sequence number register, and write a target difference between the master sequence number and the slave sequence number into a distance register corresponding to the flow identifier of the target slave output interface unit;
the target slave output interface unit is configured to, based on a start sequence number corresponding to the flow identifier and the target difference in the distance register, add a target sequence number to a data packet corresponding to the flow identifier and send a modified data packet, where the start sequence number is a sequence number of a received last data packet.

It can be seen from the above technical solutions that in one example, a method of generating a sequence number of a data packet of a deterministic flow in a deterministic network is provided so as to ensure that the sequence number of the data packet of the master output interface unit is consistent with the sequence number of the data packet of the slave output interface unit, and thus ensure the sequence number consistency of the data packets during concurrent processing of the data packets, in other words, the sequence numbers of multiple data packets (i.e. several replicas) for the same deterministic flow are continuously arranged. And the continuously-arranged sequence numbers of the deterministic flow can ensure correct implementation of the DetNet.

### BRIEF DESCRIPTION OF DRAWINGS

FIG. 1 is a schematic diagram of a working principle of CSQF in one example of the present disclosure.
FIG. 2 is a schematic diagram of a comparison of CSQF and CQF in one example of the present disclosure.
FIG. 3 is a structural schematic diagram of a network device in one example of the present disclosure.
FIG. 4 is a structural schematic diagram of a network device in one example of the present disclosure.
FIG. 5 is a structural schematic diagram of a network device in one example of the present disclosure.
FIG. 6A is a schematic diagram of a synchronization information table in one example of the present disclosure.
FIG. 6B is a schematic diagram of implementation of a master control unit in one example of the present disclosure.
FIG. 6C is a schematic diagram of a register in one example of the present disclosure.
FIG. 6D is a block diagram of a system of sequence number synchronization at an output interface unit in one example of the present disclosure.
FIGS. 7A to 7D are schematic diagrams of sequence number synchronization at an output interface unit in one example of the present disclosure.
FIG. 8 is a flowchart of a data packet transmission method in one example of the present disclosure.

### DETAILED DESCRIPTION

The terms used in the present disclosure are used for the purpose of describing particular embodiments only, and is not intended to be limiting of the present disclosure. The singular forms such as "a", "said", and "the" used in the present disclosure and the appended claims are also intended to include multiple, unless the context clearly indicates otherwise. It is also to be understood that the term "and/or" as used herein refers to any or all possible combinations and includes one or more associated listed items.

It is to be understood that although different information may be described using the terms such as first, second, third, etc., in the present disclosure, the information should not be limited to these terms. These terms are used only to distinguish one category of information from another. For example, without departing from the scope of the present disclosure, the first information may be referred to as the second information and similarly, the second information may also be referred to as the first information. Depending on the context, the word "if" as used herein may be interpreted as "when" or "as" or "in response to determining".

A Time-Sensitive Networking (TSN) is a deterministic network realized based on a local area network. In a TSN, deterministic transmission at a forwarding plane is guaranteed by using Cyclic Queuing and Forwarding (CQF), so as to provide deterministic service functions for bearer services. The CQF is only an example of providing deterministic services, and the deterministic transmission at the forwarding plane can be ensured by another manner. Thus, no limitation is made herein. The CQF, as a technology close to Cycle Specified Queuing and Forwarding (CSQF), has the following basic working principle: an egress interface of each network device is associated with two queues, and a time domain is divided into two cycles, where these two queues are sent and received alternately in the two cycles. For example, the two queues are denoted as queue Q1 and queue Q2, and the two cycles are denoted as T0 cycle and T1 cycle. Within the T0 cycle, the queue Q1 is sent and the queue Q2 is received (the reception of the queue Q1 is off, the reception of the queue Q2 is on, the sending of the queue Q1 is on, and the sending of the queue Q2 is off); within the T1 cycle, the queue Q1 is received and the queue Q2 is sent; and so on. In this way, the queue Q1 and the queue Q2 can be alternated in odd and even cycles.

The CQF requires transmission of one cycle for each hop. A data packet is received on a network device in a certain cycle, and sent in a next cycle, and a next network device receives the data packet in the next cycle, and so on. When the cycle T is a determined value, the transmission delay (end-to-end transmission delay) of the data packet on a path is determined. The transmission delay has a minimum value of (H-1)*T and a maximum value of (H+1)*T, where H is a number of hops which represents a total number of network devices the data packet passes through on the path.

Since the CQF is a technology based on the local area network, it cannot be implemented in a wide area network. In order to achieve a deterministic transmission of the wide area network, CSQF is proposed based on the CQF. The CSQF is combined with Segment Routing (SR) application or SRv6 application to achieve the deterministic transmission of the wide area network, where the SR is SR based on Multi-Protocol Label Switching (MPLS), and the SRv6 is IPV6-based SRv6.

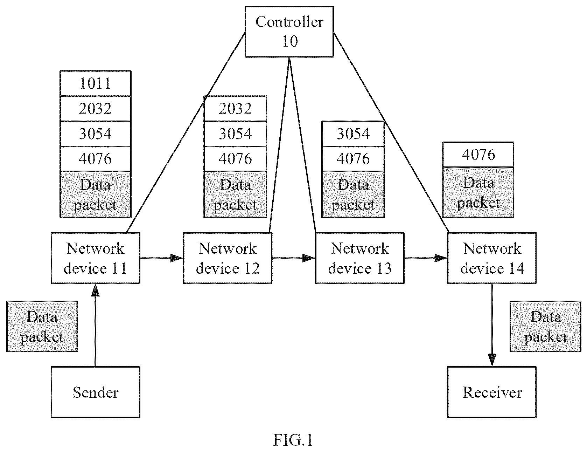

As shown in FIG. 1, it is a schematic diagram of a working principle of the CSQF. The controller 10 is used to collect information (such as sending capability, interface, cycle number, intra-node maximum jitter, and the like) of each network device. For a deterministic transmission requirement between a sender and a receiver, the controller 10 may, if finding sufficient transmission resources through calculation, allocate a transmission path and distribute information of the transmission path to an edge node. As shown in FIG. 1, the transmission path between the sender and the receiver may be: network device 11 - network device 12 - network device 13 - network device 14, where the edge node (i.e., the first network device) of the transmission path is the network device 11.

After receiving a data packet to be forwarded, the network device 11 may add the information (such as a node identifier of the network device in the path (e.g., a locator in Segment identifier (SID) of SRv6 and the like), a sending interface of the network device, and a cycle for transmission of the network device) of each network device in the transmission path to the data packet. In this case, after the data packet arrives at a network device, the network obtains the information of the corresponding interface and cycle, and stores the data packet into a queue corresponding to the cycle.

For each network device, the data packets in each queue can be sent in a particular cycle, namely, each queue corresponds to one cycle in which the data packets in this queue can be sent. The cycle of the network device is configured in a fixed mode, and thus, in the network device 11, the specified cycle of each data packet of the sender is invariable and the cycle in which the data packet from the sender to the receiver is forwarded on each network device is determined. Therefore, the entire delay is determined and hence the deterministic transmission can be achieved.

In conclusion, it can be seen that the implementation processes of the CSQF and CQF are similar, the difference between the CSQF and the CQF may include the following. The CSQF needs at least three queues (e.g., 3, 6, 8, 9, 10, 12, 15 queues and so on; 15 queues are taken as an example subsequently), where there is only one queue in a sending state and other queues are in a receiving state in each cycle. For the CQF, the cycles of each network device are required to be strictly synchronized, which includes phase synchronization; and for the CSQF, the cycles of each network device are only required to be synchronized in frequency without phase synchronization. Furthermore, if the transmission delay of a certain hop cannot be completed in one cycle, a queue transmitted in a next cycle can be specified, thus adapting to the transmission delay of different network devices in the wide area network.

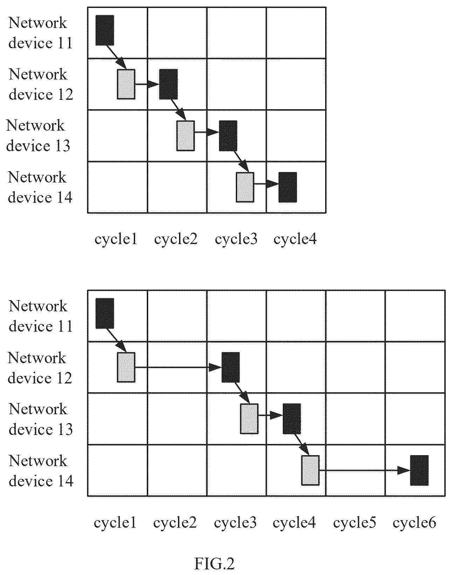

As shown in FIG. 2, it is a schematic diagram of a comparison of CSQF and CQF. For the CQF, in a transmission process of a certain data packet, the network device 11 sends the data packet in the cycle 1 and the network device 12 receives the data packet in the cycle 1; the network device 12 sends the data packet in the cycle 2, and the network device 13 receives the data packet in the cycle 2; the network device 13 sends the data packet in the cycle 3 and the network device 14 receives the data packet in the cycle 3; and the network device 14 sends the data packet in the cycle 4. For the CSQF, taking the CSQF requiring three queues as an example, in a transmission process of a certain data packet, the network device 11 sends the data packet in the cycle 1, and the network device 12 receives the data packet in the cycle 1 or the cycle 2; the network device 12 sends the data packet in the cycle 3, and the network device 13 receives the data packet in the cycle 3; the network device 13 sends the data packet in the cycle 4, and the network device 14 receives the data packet in the cycle 4 or the cycle 5; and the network device 14 sends the data packet in the cycle 6.

During an implementation process of the CSQF, the entire delay of the data packet can be determined for the reason below: in each network device, a time slice is divided according to a fixed length as a cycle, and flow scheduling is performed on deterministic service flows in a unified way such that the service flows can be forwarded within a determined time slice. The sending time of each network device on the transmission path is limited to within one specific time slice, such that the delay jitter of the data packet on the network device is always determined. Regardless of the number of network devices added, the jitter of a previous network device will not increase jitter delay of a next network device. When the total number of the network devices is increased, the total forwarding delay is also increased.

For the last network device, the data pack is only received and sent within a determined time slice, namely, the jitter range of the data packet in the last network device is limited to within one determined time slice.

Although the CSQF can achieve the deterministic transmission in the wide area network, there is no reasonable solution for how to achieve a deterministic flow-based sequence number when implementing Packet Replication Elimination and Ordering Functions (PREOF) requirements.

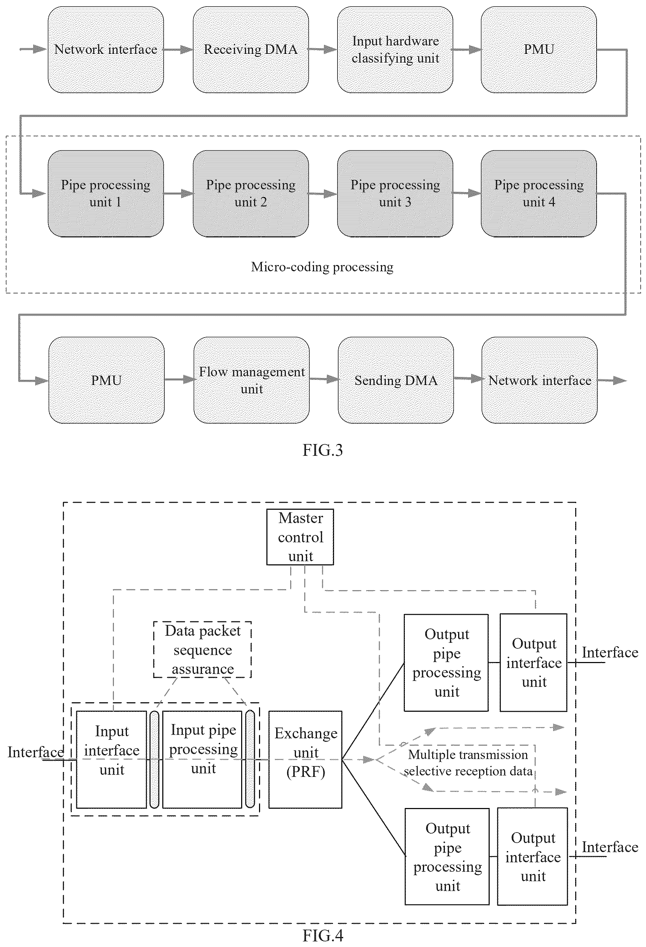

As shown in FIG. 3, it is a schematic diagram of a forwarding processing flow of a data packet within a Network Processor (NP). In order to ensure the flexibility of the forwarding, multiple pipe processing units are implemented by micro-coding processing (also called pipe processing) within the NP. The multiple pipe processing units may perform parallel processing on the data packet so as to fully utilize the processing capability of the NP. Furthermore, the multiple pipe processing units can achieve load balance.

After the data packet is received by a network interface, the data packet is transmitted to a receiving Direct Memory Access (DMA), and the receiving DMA transmits the data packet to an input hardware classifying unit, and then the input hardware classifying unit transmits the data packet to a processor management unit (PMU), where multiple data packets wait in queue in the processor management unit.

After completing the processing of a current data packet, a pipe processing unit actively sends a request to the processor management unit. The processor management unit distributes one processing task (data packet) to the pipe processing unit for processing, where the data packet is not dequeued. The pipe processing unit responds to the processor management unit after completing the processing, and the processor management unit dequeues a data packet at a queue head. Thus, as long as data packet(s) at the queue head has not been processed, data packets in the entire queue have to stay in the queue, such that the sequence of the data packets can be guaranteed by the processor management unit. The pipe processing unit may send a processed data packet to the processor management unit, the processor management unit then sends the data packet to a flow management unit, and the flow management unit then sends the data packet to a sending DMA, and then the sending DMA sends the data packet to a network interface which then sends the data packet to outside.

For the PREOF of a deterministic flow, it is required to encapsulate a sequence number for each data packet in a same deterministic flow. The same data packets distributed on multiple member paths of the PREOF need to have a same sequence number, and then, ordering, replica deletion and the like of the data packets can be achieved based on the sequence number. For example, a data packet A is distributed by multiple member paths, the distributed data packets A need to have a same sequence number.

Although the processor management unit can guarantee the data packets are dequeued in a reception order, the processor management unit does not have the function of generating a sequence number and also cannot complete the data packet replication function. In this case, when a same data packet is distributed on multiple member paths, it cannot be guaranteed that the distributed data packets have a same sequence number.

For the above problem, the present disclosure provides a data packet transmission method, which can be applied to a network device (also called a network node, where the network device is a forwarding device in a forwarding path of a deterministic network). The network device may be a centralized multi-core forwarding device or a high-performance distributed device implemented based on NP, for example, PE (Provider edge) device or P (Provider) device. The type of the network device is not limited herein.

As shown in FIG. 4, it is a structural schematic diagram of a network device. The network device may include but not limited to a master control unit, an input interface unit, an input pipe processing unit, an exchange unit, at least two output pipe processing units and at least two output interface units. The number of the output pipe processing units may be equal to the number of the output interface units, that is, the output pipe processing units are in one-to-one correspondence with the output interface units.

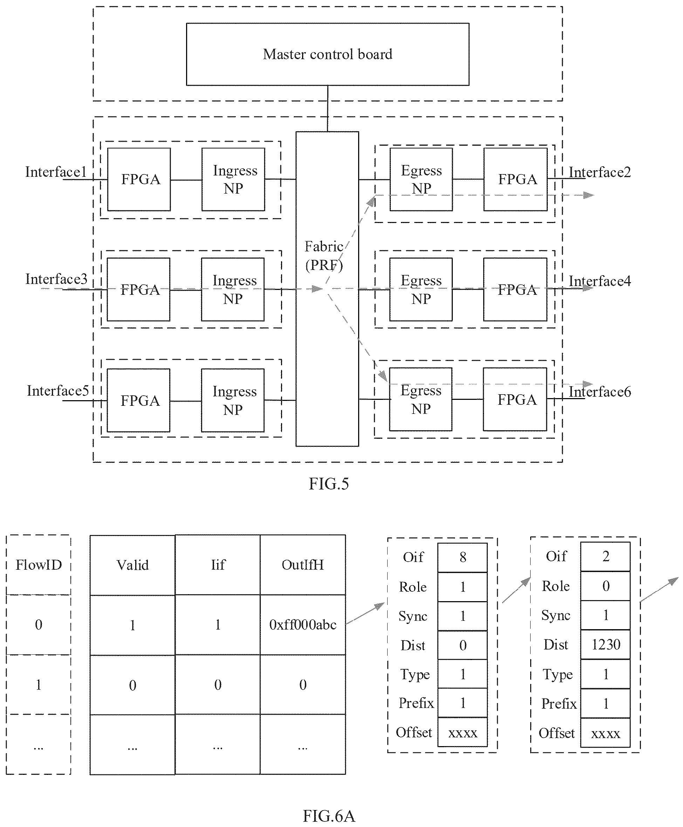

As shown in FIG. 5, it is another structural schematic diagram of a network device. The master control unit may be a master control board, or it can be called a controller, that is, the master control unit is implemented by the master control board. The input interface unit may be a Field Programmable Gate Array (FPGA), that is, the input interface unit is implemented by the FPGA. The input interface unit may also be implemented by an ASIC device or the like, which is not limited herein. The input pipe processing unit may be an Ingress NP, that is, the input pipe processing unit is implemented by the NP. The exchange unit may be a Fabric, that is, the exchange unit is implemented by the Fabric. The output pipe processing unit may be an Egress NP, that is, the output pipe processing unit is implemented by the NP. The output interface unit may be an FPGA, that is, the output interface unit is implemented by the FPGA. The output interface unit may also be implemented by an ASIC device or the like, which is not limited herein.

The input interface unit may receive multiple data packets of a same deterministic flow, and based on a reception order of the multiple data packets, add an auxiliary identifier for each data packet (the auxiliary identifier is used to assist in implementing synchronization), where the auxiliary identifier of a latter data packet is greater than the auxiliary identifier of a previous data packet. Based on an ascending order of the auxiliary identifiers, the input interface unit sends each data packet one after another to the input pipe processing unit.

For example, an auxiliary identifier 1 is added to a first data packet received, an auxiliary identifier 2 is added to a second data packet received, and so on.

The input pipe processing unit may receive the multiple data packets of the same deterministic flow, sort the multiple data packets based on the ascending order of the auxiliary identifiers, and remove the auxiliary identifier in each data packet. The input pipe processing unit may traverse each data packet in order (i.e., traverse each data packet based on the ascending order of the auxiliary identifiers), for the currently-traversed data packet, determine a flow identifier of a deterministic flow to which the data packet belongs, encapsulate the flow identifier into the data packet and send the data packet to the exchange unit.

For example, the input pipe processing unit receives a large number of data packets and distinguishes multiple data packets of a same deterministic flow from these data packets, such as, multiple data packets of a determinist flow A, multiple data packets of a deterministic flow B, and so on. The processing manner for each deterministic flow is same and subsequent descriptions will be made with one deterministic flow as an example.

For multiple data packets of a same deterministic flow, the multiple data packets are sorted based on the ascending order of the auxiliary identifiers (the auxiliary identifiers are analyzed from the data packets), and then each data packet is traversed in this order. For the currently-traversed data packet, a flow identifier of the deterministic flow to which the data packet belongs is determined, the flow identifier is encapsulated in this data packet, and then the data packet is sent to the exchange unit.

A flow identifier of a deterministic flow is allocated for the deterministic flow by the input pipe processing unit. The flow identifiers of different deterministic flows are different and multiple data packets of a same deterministic flow correspond to a same flow identifier. For example, the input pipe processing unit may identify a flow based on data characteristics of the deterministic flow and map the deterministic flow to a flow identifier.

Since the multiple data packets are sorted based on the ascending order of the auxiliary identifiers, it is guaranteed that the multiple data packets can be sent in order when the multiple data packets are sent to the exchange unit. For example, the first data packet of the deterministic flow is sent to the exchange unit first, then the second data packet of the deterministic flow is sent to the exchange unit, and then the third data packet of the deterministic flow is sent to the exchange unit, and so on.

The exchange unit may receive the multiple data packets of the same deterministic flow (i.e., receive multiple data packets in order). For each received data packet, the data packet is sent to the output pipe processing unit which then sends the data packet to the output interface unit.

For example, after the data packets are received by the exchange unit in order, for each data packet, the exchange unit determines output interface units corresponding to the data packet (for example, K output interface units, where K is a positive integer greater than 1), and performs data packet replication to obtain K same data packets, and then sends the K data packets to K output pipe processing units corresponding to K output interface units. Proposed that the data packet corresponds to an output interface unit 1, an output interface unit 2 and an output interface unit 4, the exchange unit replicates two more extra data packets so as to obtain three data packets. The first data packet is sent to an output pipe processing unit 1 corresponding to the output interface unit 1, the second data packet is sent to an output pipe processing unit 2 corresponding to the output interface unit 2, and the third data packet is sent to an output pipe processing unit 4 corresponding to the output interface unit 4.

In one example, the output interface units may be divided into a master output interface unit, for example, one master output interface unit, and one or more slave output interface units, for example, at least one slave output interface unit, where all remaining output interface units other than the master output interface unit are slave output interface unit(s). Therefore, the exchange unit may send the data packet to an output pipe processing unit corresponding to the master output interface unit and the output pipe processing unit sends the data packet to the master output interface unit. Further, the exchange unit may also send the data packet to an output pipe processing unit corresponding to a slave output interface unit, and the output pipe processing unit sends the data packet to the slave output interface unit (i.e., the slave output interface unit corresponding to the output pipe processing unit).

The output pipe processing unit may receive the multiple data packets of the same deterministic flow (i.e., receive multiple data packets in order). For each received data packet, the data packet is sent to the output interface unit corresponding to the output pipe processing unit. For example, the output pipe processing unit corresponding to the master output interface unit may send the data packet to the master output interface unit, and the output pipe processing unit corresponding to the slave output interface unit may send the data packet to the slave output interface unit.

After receiving the data packet, the output pipe processing units may also perform Quality of Service (QoS) scheduling and an internal transmission channel selection so as to send the data packet to the output interface units over different transmission channels, which is not limited herein.

The output interface unit may receive the multiple data packets of the same deterministic flow (i.e., receive multiple data packets in order). For each received data packet, based on a start sequence number corresponding to the flow identifier of the deterministic flow, a target sequence number is added to the data packet, where the start sequence number is a sequence number of a previous data packet. The output interface unit may remove the flow identifier in the data packet and send the modified data packet.

For example, after receiving the first data packet of the deterministic flow, the master output interface unit may add a target sequence number to the data packet, where the target sequence number is a fixed value, for example, 1, 1000, 5000 or the like, and the target sequence number is 1 as example. After receiving the second data packet of the deterministic flow, the master output interface unit adds a target sequence number to the data packet, where the target sequence number is a sum of a start sequence number (i.e., the target sequence number of the first data packet) and 1, i.e., the target sequence number is 2. After receiving the third data packet of the deterministic flow, the master output interface unit may add a target sequence number to the data packet, where the target sequence number is a sum of a start sequence number (i.e., the target sequence number of the second data packet) and 1, i.e., the target sequence number is 3, and so on.

For each slave output interface unit (with one slave output interface unit as an example), after receiving the first data packet of the deterministic flow, the slave output interface unit may add a target sequence number to the data packet, where the target sequence number is 1. After receiving the second data packet of the deterministic flow, the slave output interface unit may add a target sequence number to the data packet, where the target sequence number is a sum of a start sequence number and 1, i.e., the target sequence number is 2. After receiving the third data packet of the deterministic flow, the slave output interface unit may add a target sequence number to the data packet, where the target sequence number is a sum of a start sequence number and 1, i.e., the target sequence number is 3, and so on.

After receiving the data packet, the output interface unit may perform deterministic scheduling, perform synthetic scheduling with the best-effort flow, and generate hardware information simultaneously and then send it out, which is not limited herein.

In one example, since different output interface units have different enable time and different count start time, it cannot be guaranteed that the same data packet has the same target sequence number in different output interface units. For example, the output interface unit 1 is firstly enabled and the output interface unit 2 is enabled later; when the output interface unit 2 is enabled, the output interface unit 1 has already received a total of 100 data packets of the deterministic flow. In this case, for the 101st data packet of the deterministic flow, the output interface unit 1 adds a target sequence number 101 to the data packet upon receiving the data packet, and the output interface unit 2 adds a target sequence number 1 to the data packet upon receiving the data packet, that is, the data packet is taken as the first data packet of the output interface unit 2. Obviously, for the 101st data packet of the deterministic flow, the data packet has different target sequence numbers.

For the above findings, an extra sequence synchronization process is added in the present disclosure. Based on the sequence synchronization process, it can be guaranteed that a same data packet can have a same target sequence number in different output interface units. In order to achieve the sequence number synchronization process, all output interface units corresponding to a deterministic flow can be divided into a master output interface unit and one or more slave output interface units, where the master output interface unit may be any one of all of the output interface units, for example, the output interface unit with the earliest enabling time is taken as the master output interface unit. The remaining output interface unit(s) other than the master output interface unit are taken as the slave output interface unit(s).

The sequence synchronization process can be achieved by the master control unit. The control unit can maintain a synchronization information table. As shown in FIG. 6A, it is an example of the synchronization information table. The synchronization information table includes at least one of the followings:
FlowID: it represents a flow identifier of a deterministic flow. The flow identifier of the flow deterministic flow is an attribute of the present device and can only function in the present device. FlowID is a continuous integer in the present device and may be represented by a position in the synchronization information table. For example, the flow identifier of the first deterministic flow is 0, the flow identifier of the second deterministic flow is 1, the flow identifier of the third deterministic flow is 2, and so on. The flow identifier of the deterministic flow is an optional content of the synchronization information table.
Valid: it represents whether this table entry is valid. For example, 0 represents invalid and 1 represents valid; that is, when the value is 1, it represents the flow identifier of the deterministic flow is valid, and when the value is 0, it represents the flow identifier of the deterministic flow is invalid.
Iif: it is an interface identifier of the input interface unit and indicates that all data packets of the deterministic flow enter via the input interface unit corresponding to the interface identifier, namely, all data packets have the same input interface unit.
OutIfH: it is an egress interface information set of the output interface units, which includes set elements of multiple output interface units, representing all data packets of the deterministic flow leave from the multiple output interface units. For example, the egress interface information set includes a set element of the output interface unit 1 and a set element of the output interface unit 2, and thus, all data packets of the deterministic flow leave from the output interface unit 1 and the output interface unit 2.

For each set element of the egress interface information set, the set element may include the followings:
Oif: it is an integer, representing an interface identifier of the output interface unit, which is used to distinguish the output interface unit.
Role: it represents a role of the output interface unit. For example, 1 represents the output interface unit is a master role for the deterministic flow, that is, the output interface unit is a master output interface unit for the deterministic flow; and 0 represents the output interface unit is a slave role for the deterministic flow, that is, the output interface unit is a slave output interface unit for the deterministic flow.
Sync: it represents a synchronization state. For example, 1 represents including synchronization information and 0 represents irrelevance with synchronization.
Dist: it represents a difference (distance) between the sequence number of the slave output interface unit and the sequence number of the master output interface unit. The manner of obtaining the difference will be referred to in the later process.
Type: it represents a sequence number bit width, namely, how many bits present in a sequence number totally. For example, Type may be 1 bit, where Type = 0 represents the sequence number bit width is 16 bits and Type = 1 represents the sequence number bit width is 28 bits. The sequence number bit width may be configured to the input pipeline processing unit, and be encapsulated into metadata of the packet by the input pipeline processing unit, for example, the sequence number location is carried by a Type field of the metadata, and passed to the output interface unit via the data packet. Or, the sequence number bit width may be configured into a register space of the output interface unit, and read directly from the register space by the output interface unit.
Offset: it represents a sequence number position, namely, an offset position of a sequence number in a data packet. The sequence number position may be configured to the input pipe processing unit, and be encapsulated into metadata in the data packet by the input pipe processing unit, for example, the sequence number position is carried by an Offset field of the metadata, and passed to the output interface unit via the data packet. Or, the sequence number position may also be configured to a register space of the output interface unit and the output interface unit, and read directly from the register space by the output interface unit.
Prefix: it represents a sequence number prefix, namely, a given sequence number prefix is taken as the several highest bits in the sequence number. For example, the sequence number prefix may be 4 bits which is taken as the highest four bits in the sequence number. A sequence number suffix (e.g., 12-bit sequence number suffix) generated by the output interface unit is spliced with the sequence number prefix to form a 16 bit sequence number, which is taken as the final sequence number, and overwritten at the position indicated by the offset. The sequence number prefix may be configured to the input pipe processing unit, and be encapsulated into the metadata of the data packet by the input pipe processing unit, for example, the sequence number prefix is carried by the prefix field of the metadata, and passed to the output interface unit by the data packet. Or, the sequence number prefix may also be configured to a register space of the output interface unit, and read directly from the register space by the output interface unit.

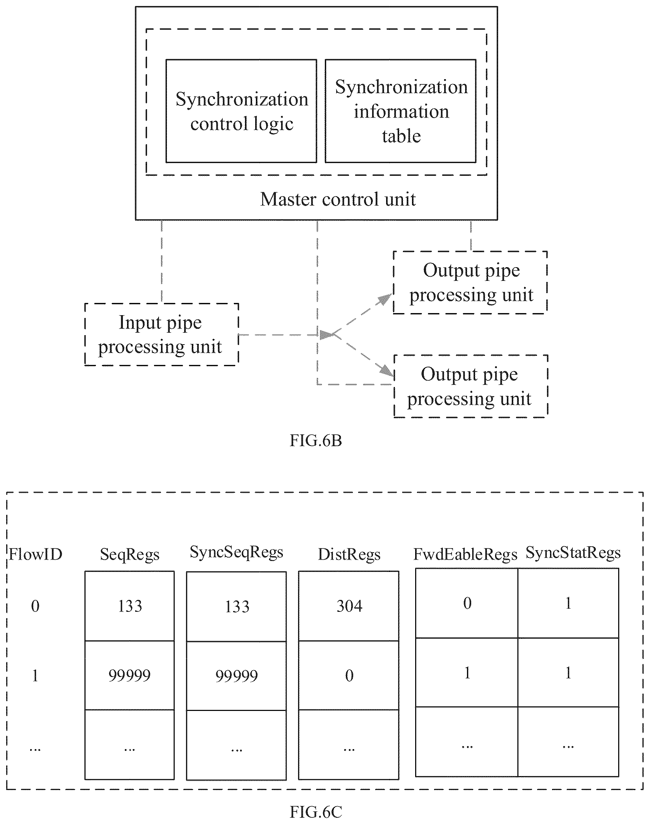

As shown in FIG. 6B, the master control unit may further include synchronization control logic as well as the synchronization information table, and may achieve sequence number synchronization based on the synchronization control logic. The synchronization control logic is used to be in charge of the maintenance of the synchronization information table and the response to a flow sequence number-related event, originate a synchronization operation based on an event and achieve sequence number synchronization in cooperation with the output interface unit. For example, the master control unit sends an information synchronization packet, reads a master sequence number and a slave sequence number, and writes a target difference between the master sequence number and the slave sequence number into a distance register, such that the slave output interface unit updates a start sequence number. The above process can be seen in the subsequent process.

In order to the achieve sequence number synchronization process, each output interface unit may maintain a relevant register. As shown in FIG. 6C, it is an example of the register. The register may include at least one of the followings:
FlowID: it is used to represent a flow identifier of a deterministic flow, which is used to distinguish different deterministic flows.
SeqRegs: it is used to represent sequence number registers and each deterministic flow corresponds to one sequence number register, for example, 1000 deterministic flows correspond to 1000 sequence number registers. The sequence number registers are indexed by the flow identifier of the deterministic flow. A sequence number register is used to record a sequence number of a last data packet of the deterministic flow, namely, the value in the sequence number register is increased by 1 after one data packet of the deterministic flow is received each time.
SyncSeqRegs: it is used to represent synchronization sequence number registers, which correspond to the sequence number registers one to one. Each deterministic flow corresponds to one synchronization sequence number register. The synchronization sequence number registers are indexed by the flow identifier of the deterministic flow. When the information synchronization packet is received, a sequence number in a sequence number register (i.e., the sequence number of the last data packet of the deterministic flow) is recorded into a corresponding synchronization sequence number register. The synchronization sequence number register may store a sequence number to be synchronized. For example, when the output interface unit obtains a sequence number to be synchronized for the deterministic flow, it can be temporarily stored in a synchronization sequence number register corresponding to the deterministic flow in the SyncSeqRegs. For example, if the flow identifier is 100, the sequence number is temporarily stored in SyncSeqRegs[100].
DistRegs: it is used to represent distance registers. Each deterministic flow corresponds to one distance register. The distance registers are indexed by the flow identifier of the deterministic flow. A distance register is used to record a difference (distance) between the sequence number of the slave output interface unit and the sequence number of the master output interface unit. If a flow identifier of a sequence number to be generated is 100, the slave output interface unit generates a sequence number SeqNum actually written into a data packet: SeqNum = SeqRegs [100] + DistRegs [100]; where SeqRegs [100] represents a sequence number value in the sequence number register of the slave output interface unit, and DistRegs [100] represents a sequence number difference in the distance register.
SyncStatRegs: it is used to represent control state registers. Each deterministic flow corresponds to one control state register. The control state registers are indexed by the flow identifier of the deterministic flow. A control state register is used to record a completion state of the synchronization information preparation. For example, a first value represents the synchronization information preparation is uncompleted, and a second value represents the synchronization information preparation is completed. For example, when the control state register is 1, it represents the completion of the output interface unit preparing a sequence number to be synchronized, and the master control unit may obtain a synchronized sequence number from the synchronization sequence number register. When the control state register is 0, it represents that the output interface unit has not completed a sequence number to be synchronized, and the master control unit does not obtain a synchronized sequence number from the synchronization sequence number register. The control state registers of the master output interface unit and the slave output interface unit may be the same, with its default value being 0.
FwdEableRegs: it is used to represent forwarding control registers. Each deterministic flow corresponds to one forwarding control register. The forwarding control registers are indexed by the flow identifier of the deterministic flow. A forwarding control register is used to represent whether to allow forwarding a data packet to outside. For example, a third value represents a blocking state, which represents disallowing forwarding a data packet to outside, and a fourth value represents a forwarding state, which represents allowing forwarding a data packet to outside.

For example, for each slave output interface unit, if the forwarding control register is 1, it indicates a forwarding state which allows forwarding a data packet to outside; and if the forwarding control register is 0, it indicates a blocking state which disallows forwarding a data packet to outside, namely, the data packet is directly discarded, but the sequence number in the sequence number register still needs to be updated. For the master output interface unit, the value of the forwarding control register is not concerned, namely, no matter whether the forwarding control register is 0 or 1, a data packet is directly forwarded to outside.

In one example, SyncCtrlstatRegs registers may be configured. The SyncCtrlstatRegs registers may include the control state registers: SyncStatRegs and the forwarding control registers: FwdEableRegs, where the control state registers SyncStatRegs serve as a state bit and the forwarding control registers FwdEableRegs serve as a state bit.

Apparently, for the slave output interface unit, each time a data packet is received, a sequence number in a corresponding sequence number register is updated based on the received data packet, that is, the corresponding sequence number can be updated each time one data packet is received. But, when a corresponding forwarding control register is 0, the data packet is not forwarded to outside but discarded.

The synchronization sequence number registers SyncSeqRegs may be deployed in the output interface unit; the distance register DistRegs may be deployed in the output interface unit; the control state register SyncStatRegs may be deployed in the output interface unit; and the forwarding control register FwdEableRegs may be deployed in the output interface unit.

In one example, the sequence number synchronization process may include the following steps.

At step S11, the master control unit sends an information synchronization packet to the input interface unit.

In one example, when it is required to perform sequence number synchronization for a certain deterministic flow, the synchronization information table (FIG. 6A) is queried based on a flow identifier of the deterministic flow to obtain an input interface unit corresponding to the deterministic flow, and then an information synchronization packet is sent to the input interface unit, where the information synchronization packet includes the flow identifier of the deterministic flow.

For example, when a deterministic flow is newly established, the master control unit triggers sequence number synchronization for the deterministic flow. At this time, a master output interface unit and slave output interface unit(s) corresponding to the newly-established deterministic flow are obtained, and an information synchronization packet is sent to the master output interface unit and one or more target slave output interface units. On this basis, the master control unit may send the information synchronization packet to the input interface unit. The one or more target slave output interface units may include some slave output interface units or all slave output interface units.

For another example, for a deterministic flow (i.e., any deterministic flow), if the master output interface unit corresponding to the deterministic flow fails, the master control unit may elect a new master output interface unit from all slave output interface units, take the remaining slave output interface units other than the new master output interface unit as the target slave output interface units, and trigger sequence number synchronization for the deterministic flow. At this time, the master control unit may send the information synchronization packet to the newly-elected master output interface unit and the target slave output interface units. On this basis, the master control unit may send the information synchronization packet to the input interface unit corresponding to the deterministic flow.

For another example, for a deterministic flow (i.e., any deterministic flow), if a slave output interface unit corresponding to the deterministic flow is added, the newly-added slave output interface unit is taken as the target slave output interface unit, and the remaining slave output interface unit(s) may or may not be taken as the target slave output interface unit(s). The master control unit triggers sequence number synchronization for the deterministic flow. At this time, the master control unit may send the information synchronization packet to the master output interface unit and the target slave output interface unit(s), and the master control unit can send the information synchronization packet to the input interface unit corresponding to the deterministic flow.

For another example, for a deterministic flow (i.e., any deterministic flow), if a slave output interface unit corresponding to the deterministic flow recovers from failure, the recovered slave output interface unit is taken as the target slave output interface unit, and the remaining slave output interface unit(s) may or may not be taken as the target slave output interface unit(s). The master control unit triggers sequence number synchronization for the deterministic flow. At this time, the master control unit may send the information synchronization packet to the master output interface unit and the target slave output interface unit(s), and the master control unit may send the information synchronization packet to the input interface unit corresponding to the deterministic flow.

For another example, for a deterministic flow (i.e., any deterministic flow), the master control unit may obtain a synchronization cycle of the deterministic flow, and trigger sequence number synchronization for the deterministic flow in each synchronization cycle. At this time, the master control unit may, based on the synchronization cycle (i.e., each synchronization cycle), send the information synchronization packet to the master output interface unit and the target slave output interface units (e.g., each slave output interface unit). On this basis, for each synchronization cycle, the master control unit sends the information synchronization packet to the input interface unit corresponding to the deterministic flow.

The above are only several examples of the trigger condition, and no limitation is made herein to the trigger condition.

**At** step S12, the input interface unit sends the information synchronization packet to the input pipe processing unit.

At step S13, the input pipe processing unit sends the information synchronization packet to the exchange unit.

In one example, after receiving the information synchronization packet, the input pipe processing unit may analyse the flow identifier of the deterministic flow from the information synchronization packet, query about metadata corresponding to the flow identifier, and encapsulate the metadata into the information synchronization packet and then send the modified information synchronization packet to the exchange unit.

For example, the metadata may include a synchronization (Sync) state. Since the information synchronization packet is used to achieve sequence number synchronization, the synchronization state encapsulated in the information synchronization packet by the input pipe processing unit is 1, such that it is indicated by the synchronization state that the current data packet is the information synchronization packet.

The metadata may further include a sequence number bit width, a sequence number prefix and a sequence number position. The input pipe processing unit may store a correspondence between flow identifier and sequence number bit width, sequence number prefix and sequence number position. The correspondence is sent by the master control unit to the input pipe processing unit. As a result, the input pipe processing unit may query the correspondence based on the flow identifier of the deterministic flow to obtain the sequence number bit width, the sequence number prefix and the sequence number position, and encapsulate the sequence number bit width, the sequence number prefix and the sequence number position into the information synchronization packet.

At step S14, the exchange unit sends the information synchronization packet to an output pipe processing unit corresponding to a master output interface unit, and the output pipe processing unit sends the information synchronization packet to the master output interface unit; and the exchange unit also sends the information synchronization packet to one or more output pipe processing units corresponding to one or more target slave output interface units, and the one or more output pipe processing units send the information synchronization packet to the one or more target slave output interface units.

Till now, the information synchronization packet is successfully sent to the master output interface unit and the one or more target slave output interface units, namely, the master control unit sends the information synchronization packet to the master output interface unit and the target slave output interface unit.

**At** step S15, after receiving the information synchronization packet, the master output interface unit writes a master sequence number into a master synchronization sequence number register corresponding to the flow identifier, where the master sequence number is a sequence number of a last data packet received by the master output interface unit; and the master output interface unit modifies a master control state register corresponding to the flow identifier from a first value to a second value, where the first value represents the synchronization information preparation is not ready and the second value represents the synchronization information preparation is ready.

For example, the master output interface unit may analyse the synchronization state (Sync) from the information synchronization packet. If the synchronization state is 1, it indicates the current data packet is the information synchronization packet and sequence number synchronization can be achieved based on the information synchronization packet. In order to achieve sequence number synchronization, the flow identifier of the deterministic flow may be parsed from the information synchronization packet, and then registers shown in the FIG. 6C are queried based on the flow identifier to obtain a sequence number in a sequence number register (in SeqRegs), and then the sequence number is recorded as the master sequence number into a master synchronization sequence number register (in SyncSeqRegs).

Next, a master control state register (in SyncSeqRegs) corresponding to the flow identifier is modified from the first value to the second value, which represents the synchronization information preparation of the master output interface unit is completed.

**At** step S16, after receiving the information synchronization packet, a target slave output interface unit writes a slave sequence number into a slave synchronization sequence number register corresponding to the flow identifier, where the slave sequence number is a sequence number of a last data packet received by this slave output interface unit, and the target slave output interface unit also modifies a slave control state register corresponding to the flow identifier from a first value to a second value. For example, the target slave output interface unit may analyze the synchronization state (Sync) from the information synchronization packet. If the synchronization state is 1, sequence number synchronization can be achieved based on the information synchronization packet. In order to achieve sequence number synchronization, the flow identifier of the deterministic flow may be analyzed from the information synchronization packet, registers shown in the FIG. 6C are queried based on the flow identifier to obtain a sequence number in a sequence number register (in SeqRegs) and then the sequence number is recorded as a slave sequence number into a slave synchronization sequence number register. Next, the target slave output interface unit modifies a slave control state register corresponding to the flow identifier from the first value to the second value, which represents the synchronization information preparation of the slave output interface unit is completed.

In one example, after receiving the information synchronization packet, the master output interface unit may not update the sequence number based on the information synchronization packet nor send the information synchronization packet to outside, but the master output interface unit may discard the information synchronization packet. After receiving the information synchronization packet, the target salve output interface unit may not update the sequence number based on the information synchronization packet nor send the information synchronization packet to outside, but the target salve output interface unit may discard the information synchronization packet.

**At** step S17, the master output interface unit sends a master interruption event message to the master control unit, where the master interruption event message includes the flow identifier and an interface identifier of the master output interface unit, and is used to represent that the synchronization information preparation of the master output interface unit is completed. The target slave output interface unit sends a slave interruption event message to the master control unit, where the slave interruption event message includes the flow identifier and an interface identifier of the target slave output interface unit, and is used to represent that the synchronization information preparation of the target slave output interface unit is completed.

At step S18, after receiving the master interruption event message, the master control unit queries whether a master control state register (i.e., control state registers corresponding to the interface identifier of the master output interface unit) corresponding to the flow identifier (obtained from the master interruption event message) is the second value; after receiving the slave interruption event message, the master control unit queries whether a slave control state register (i.e. control state registers corresponding to the interface identifier of the target slave output interface unit) corresponding to the flow identifier (obtained from the slave interruption event message) is the second value.

**At** step S19, if both the master control state register and the slave control state register are the second value, the master control unit reads a master sequence number from a corresponding master synchronization sequence number register and reads a slave sequence number from a corresponding slave synchronization sequence number register. Or, if at least one of the master control state register or the slave control state register is not the second value, the master sequence number and the slave sequence number are re-read after waiting for a preset time length; and after reading a preset number of times, the master control unit returns to the step S11 to repeat the above sequence number synchronization process.

At step S20, after obtaining the master sequence number and the slave sequence number, the master control unit writes a target difference between the master sequence number and the slave sequence number into a distance register corresponding to the flow identifier in the target slave output interface unit.

Although the sequence number may change in real time, the characteristics that the difference (i.e., the target difference of the master sequence number and the slave sequence number) is invariable may be used. Thus, based on the difference between the master sequence number and the slave sequence number, and the sequence number of the target slave output interface unit, a sequence number same as that of the master output interface unit may be generated, namely, the difference is accumulated to the sequence number of the target slave output interface unit to obtain a sequence number same as that of the master output interface unit. Based on the above principle, the master control unit may calculate the target difference between the master sequence number and the slave sequence number, and write the target difference into the distance register corresponding to the flow identifier in the target slave output interface unit.

At step S21, after writing the target difference into the distance register, the master control unit modifies the master control state register corresponding to the flow identifier from the second value to the first value, and modifies the slave control state register corresponding to the flow identifier from the second value to the first value. For example, the master control state register is modified from the second value to the first value and the synchronization state of the master output interface unit is cleared, which represents that the synchronization information preparation of the master output interface unit is not completed and a next sequence number synchronization process is awaited. The slave control state register is modified from the second value to the first value and the synchronization state of the target slave output interface unit is cleared, which represents that the synchronization information preparation of the target slave output interface unit is not completed and a next sequence number synchronization process is awaited.

At step S22, the target slave output interface unit reads the target difference from the distance register corresponding to the flow identifier and based on the target difference, and updates a start sequence number corresponding to the flow identifier.

For example, when the target difference is present in the distance register (in DistRegs) corresponding to the flow identifier, the target slave output interface unit may calculate a sum value of the target difference and the sequence number of the target slave output interface unit, where the sum value is taken as the start sequence number corresponding to the flow identifier. The sequence number of the target slave output interface unit may be a value in a sequence number register (in SeqRegs), where the sequence number represents a sequence number of a last data packet of the deterministic flow. After the start sequence number corresponding to the flow identifier is obtained, the start sequence number may be updated to the sequence number register (in SeqRegs), and in a subsequent process, the start sequence number can be taken as the sequence number of the last data packet of the deterministic flow so as to control the sequence numbers of subsequent data packets. After the above operations, the sequence number in the sequence number register (in SeqRegs) of the slave output interface unit is same as the sequence number in the sequence number register (in SeqRegs) of the master output interface unit.

The step S22 is an optional step. The start sequence number corresponding to the flow identifier may not be updated based on the target difference, that is, the sequence number in the sequence number register (in SeqRegs) is maintained unchanged. Thus, the sequence number in the sequence register (in SeqRegs) is taken as the start sequence number without updating the start sequence number.

At step S23, after reading the target difference from the distance register, the target slave output interface unit modifies a forwarding control register (i.e., in forwarding control registers of the target slave output interface unit) corresponding to the flow identifier from a third value to a fourth value, where the third value is used to represent a blocking state and the fourth value is used to represent a forwarding state. Or, after writing the target difference into the distance register, the master control unit modifies the forwarding control register corresponding to the flow identifier from the third value to the fourth value.

In one example, if the target slave output interface unit needs to update the start sequence number corresponding to the flow identifier based on the target difference, the target slave output interface unit may modify the forwarding control register corresponding to the flow identifier from the third value to the fourth value. Or, if the target slave output interface unit does not update the start sequence number corresponding to the flow identifier based on the target difference, the master control unit may modify the forwarding control register corresponding to the flow identifier from the third value to the fourth value. No limitation is made herein.

In one example, an initial value of the forwarding control register of the target slave output interface unit is the third value. When the forwarding control register is the third value, each time the target slave output inter face unit receives a data packet corresponding to the flow identifier, the target slave output interface unit only updates a slave sequence number corresponding to the flow identifier (i.e., update the sequence number in the sequence number register (in SeqRegs), for example, increase by 1 or the like) but prohibits sending the data packet, that is, discards the data packet. In this way, the forwarding control register is set as a blocking state, which prevents sending the data packet to outside, so as to avoid interference on behaviors of a peer end. At this time, only the master output interface unit sends the data packet outward, whereas the target slave output interface unit does not send the data packet outward.

In one example, after the forwarding control register is modified from the third value to the fourth value, the blocking state of the target slave output interface unit is released to enable the target slave output interface unit to be in the forwarding state. Upon receiving the data packet corresponding to the flow identifier each time, the target slave output interface unit may send the data packet as well as updating the sequence number corresponding to the flow identifier (i.e., updating the sequence number in the sequence number register (in SeqRegs)).

At step S24, when the forwarding control register is the fourth value, that is, when the target slave output interface unit is in the forwarding state, each time the target slave output interface unit receives the data packet corresponding to the flow identifier, the target slave output interface unit determines a target sequence number of the data packet, adds the target sequence number to the data packet and sends the modified data packet. For example, the target slave output interface unit may, based on the start sequence number corresponding to the flow identifier and the target difference in the distance register, add a target sequence number to the data packet corresponding to the flow identifier and send the modified data packet, where the start sequence number is a sequence number of a received last data packet. Furthermore, upon receiving the data packet corresponding to the flow identifier each time, the master output interface unit may, based on the start sequence number, determine a target sequence number corresponding to the data packet, add the target sequence number to the data packet and send the modified data packet.

In one example, the target slave output interface unit reads the target difference from the distance register corresponding to the flow identifier and updates the start sequence number corresponding to the flow identifier based on the target difference, i.e., determines a sum of the start sequence number (the value in the sequence number register (in SeqRegs)) and the target difference, and updates the sum value to the start sequence number corresponding to the flow identifier, namely, updates the sum value to the sequence number register (in SeqRegs), then the master output interface unit and the target slave output interface unit have the same processing manner. For the master output interface unit and the target slave output interface unit (the master output interface unit and the target slave output interface unit will be collectively called as output interface unit hereinafter), the target sequence number may be added to the data packet in the following manner.

Firstly, the output interface unit obtains a sequence number bit width, a sequence number prefix and a sequence number position.

In one example, the sequence number bit width, the sequence number prefix and the sequence number position may be sent to the output interface unit by the master control unit. For example, the master control unit configures the sequence number bit width, the sequence number prefix and the sequence number position to a register space of the output interface unit, and the output interface unit may read the sequence number bit width, the sequence number prefix and the sequence number position corresponding to the flow identifier directly from the register space.

In another example, the sequence number bit width, the sequence number prefix and the sequence number position are metadata encapsulated in the data packet by the input pipe processing unit and hence, the output interface unit may analyse the sequence number bit width, the sequence number prefix and the sequence number position corresponding to the flow identifier from the metadata of the data packet.

For example, when receiving a data packet, the input pipe processing unit may parse out a flow identifier of a deterministic flow from the data packet, query about metadata corresponding to the flow identifier, and encapsulate the metadata in the data packet. For example, the metadata may include a synchronization state (Sync). Since the data packet is not used for sequence number synchronization, the synchronization state encapsulated in the data packet by the input pipe processing unit may be 0 to indicate the current data packet is a normally-transmitted data packet. The input pipe processing unit may store a correspondence between flow identifier and sequence number bit width, sequence number prefix and sequence number position, where the correspondence is sent to the input pipe processing unit by the master control unit. As a result, the input pipe processing unit may query for the correspondence based on the flow identifier of the deterministic flow so as to obtain the sequence number bit width, the sequence number prefix and the sequence number position, and encapsulate the sequence number bit width, the sequence number prefix and the sequence number position in the data packet.

For example, the metadata (Sync Meta Data) encapsulated in the data packet by the input pipe processing unit may include the following. Prefix: it represents a sequence number prefix, namely, a given sequence number prefix is taken as the several highest bits in the sequence number, for example, the sequence number prefix is 4 bits, which is taken as the highest four bits in the sequence number; and after generating a sequence number suffix (e.g., 12-bit sequence number suffix), the output interface unit splices the sequence number suffix with the sequence number prefix to form a 16-bit sequence number which is a final sequence number and overwritten at the position indicated by Offset. Sync: it represents a synchronization state, with the bit width being 1 bit, for example, 1 represents including synchronization information, and 0 represents irrelevance with the synchronization. Type: it represents a sequence number bit width, namely, a total of bits in the sequence number, for example, Type is 1 bit, where Type being 0 represents that the sequence number bit width is 16 bits, and Type being 1 represents that the sequence number bit width is 28 bits. Resv0: it represents reserved, with the bit width being 10 bits. FlowID: it represents a flow identifier of a deterministic flow, with the bit width being 16 bits. Offset: it represents a sequence number position.

Next, the output interface unit generates a target sequence number, where a bit width of the target sequence number is the sequence number bit width, a prefix of the target sequence number is the sequence number prefix, and the target sequence number is greater than the start sequence number.

For example, the output interface unit may read a sequence number in a corresponding sequence number register (in SeqRegs) and take the sequence number as the start sequence number and generate a target sequence number based on the start sequence number, for example, the target sequence number may be the start sequence number plus 1. When the target sequence number is generated, the bit width of the target sequence number is the sequence number bit width, the prefix of the target sequence number is the sequence number prefix. After the target sequence number is generated, the target sequence number may also be updated to the sequence number register (in SeqRegs) as a start sequence number of a next data packet.

In conclusion, when receiving a data packet each time, the output interface unit may, based on the start sequence number in the sequence number register (in SeqRegs), generate a target sequence number of the data packet, add the target sequence number to the data packet, and update the target sequence number to a start sequence number corresponding to the flow identifier.

Next, the output interface unit adds the target sequence number to the data packet based on the sequence number position, where an offset position of the target sequence number in the data packet is the sequence number position. For example, the sequence number position is used to indicate an offset position of the target sequence number in the data packet. Therefore, the target sequence number can be added to the data packet based on the sequence number position, namely, the target sequence number is located at an offset position indicated by the sequence number position.

Next, the output interface unit may send the data packet to outside, where the sequence number of the data packet is the target sequence number. Based on the above sequence number synchronization process, the data packets sent by these output interface units have the same sequence number. The output interface unit may, before sending the data packet, also remove the flow identifier in the data packet (that is, the flow identifier of the deterministic flow is not sent to an external device), and send the modified data packet.

In one example, if the target slave output interface unit does not update the start sequence number corresponding to the flow identifier based on the target difference, namely, does not update the sum of the start sequence number and the target difference to the sequence number register (in SeqRegs), the target slave output interface unit may add the target sequence number to the data packet in the following manner:
Firstly, the target slave output interface unit obtains a sequence number bit width, a sequence number prefix and a sequence number position.
Next, the target slave output interface unit generates a target sequence number, where the bit width of the target sequence number is the sequence number bit width, the prefix of the target sequence number is the sequence number prefix and the target sequence number is greater than the start sequence number.

For example, the target slave output interface unit may read a sequence number in a corresponding sequence number register (in SeqRegs) and take the sequence number as a start sequence number, and generate a candidate sequence number based on the start sequence number, where the candidate sequence number, for example, is the start sequence number plus 1. When the candidate sequence number is generated, a bit width of the candidate sequence number is the sequence number bit width, and a prefix of the candidate sequence number is the sequence number prefix. After the candidate sequence number is generated, the candidate sequence number may be updated to the sequence number register (in SeqRegs) as a start sequence number of a next data packet.

For example, the target slave output interface unit may, after generating the candidate sequence number, also generate a target sequence number of the data packet based on the candidate sequence number and the target difference in the distance register, for example, a sum value of the candidate sequence number and the target difference is taken as the target sequence number of the data packet.

In conclusion, upon receiving a data packet each time, the target slave output interface unit may generate a candidate sequence number of the data packet based on the start sequence number in the sequence number register (in SeqRegs), and update the candidate sequence number to the start sequence number in the sequence number register (in SeqRegs). Then, a sum value of the candidate sequence number and the target difference in the distance register is taken as a target sequence number and then the target sequence number is added to the data packet.

Next**,** the target slave output interface unit adds the target sequence number to the data packet based on the sequence number position, where an offset position of the target sequence number in the data packet is the sequence number position.

Next, the target slave output interface unit may send the data packet to outside, where the sequence number of the data packet may be the target sequence number. The target slave output interface unit may, before sending the data packet, also remove the flow identifier in the data packet (i.e., the flow identifier of the deterministic flow is not sent to an external device), and send the modified data packet.

As shown in FIG. 6D, it is a system block diagram of sequence number synchronization of the output interface unit. Local CPU is an optional implementation unit, and the master control board (i.e., the master control unit) is connected with the PCIE interface (PCIE-INTF) of the output interface unit via a PCIₑ bus. The master control board interacts control flow data with the output interface unit via the PCIE interface, such as, the information synchronization packet, the interruption event message, or the like interacted in the sequence number synchronization process. The master control board may also access a sequence number synchronization register module (Registers for Sequence Number synchronization) of the output interface unit via the PCIE interface. The sequence number synchronization register module can manage each register of the output interface units, such as, synchronization sequence number registers SyncSeqRegs, distance registers DistRegs, control state registers SyncStatRegs, forwarding control registers FwdEableRegs and the like.

The output pipe processing unit (i.e., Egress NP) is connected to the output interface unit via an ILKN (Interlaken) bus, namely, connected to an adapter (IF-ADAPTER) of the output interface unit via the ILKN bus. After the data packet passes through the input pipe processing unit (Ingress NP) and the output pipe processing unit, some metadata may be generated. The metadata may be transmitted along with the data packet to the output interface unit through the ILKN bus. The metadata may include the following contents: Prefix, representing a sequence number prefix; Sync, representing a synchronization state; Type, representing a sequence number bit width; Resv0, representing a reserved field; FlowID, representing a flow identifier of a deterministic flow; and Offset, representing a sequence number position. The above is only an example of the metadata, which is not limited herein.

The output interface unit receives a data packet from the ILKN bus and the data packet is processed by the adapter. Then, a data packet assembling module (e.g., PKT-ASM module or the like) performs data packet assembling, and the assembled data packet is transmitted to a sequence number generator module (Sequence Number Generator). The sequence number generator module achieves sequence number synchronization in cooperation with the master control unit and the sequence number synchronization register module. The sequence number generator module may further generate a sequence number for the data packet of the deterministic flow that have completed synchronization, send it to another processing module for further processing, and the another processing module may perform scheduling, PTP-related processing and the like in a certain manner.

In one example, prior to the sequence number synchronization process, the following initialization process may be involved: under the control of the master control unit, the network device may perform initialization on functional modules (including each register in the input pipe processing unit, the output pipe processing unit, the output interface units and the like) based on support specification; clear each register in the output interface units; and initialize each register in the output interface units during establishing a deterministic flow, and configure each register based on the master and slave roles of the deterministic flow in the output interface units.

In one example, after receiving a data packet, the output interface unit may analyse the metadata from the data packet. It is assumed that the flow identifier in the metadata is 100. The output interface unit may also determine whether the data packet is a synchronization message based on the synchronization state (Sync) in the metadata. Sync being 1 represents an information synchronization packet and Sync being 0 represents a normal data packet. If the Sync is 0, a forwarding flow of the deterministic flow of the output interface unit is performed. If the Sync is 1, the sequence number synchronization process is performed. The sequence number synchronization process may include the followings:
The output interface unit stores a value (a current sequence number of the flow identifier 100) in the SeqRegs [100] register into the SyncSeqRegs [100]. The output interface unit sets SyncStatRegs in the SyncCtrlstatRegs [100] to 1, which indicates the output interface unit completes synchronization information preparation. The output interface unit sends an interruption event message (this step is optional) to the master control unit, where the interruption event message at least includes an interruption event type, an interface identifier of the output interface unit, and the flow identifier 100. The output interface unit discards the information synchronization packet.

The master control unit queries the registers of the output interface unit based on the interruption event message (or by active polling manner) and read a SyncStatRegs state bit of the SyncCtrlstatRegs [100] from the output interface unit. If the SyncStatRegs state bit is 1, a sequence number to be synchronized (i.e., the above master sequence number or slave sequence number) is obtained from the SyncSeqRegs [100], and the state bit is cleared by writing 0 into the SyncStatRegs.

The master control unit may, based on the obtained sequence number, the interface identifier of the output interface unit and the flow identifier and in combination with a synchronization information table, calculate a target distance Dist between the sequence number of the slave output interface unit and the sequence number of the master output interface unit, where the target distance is stored in the synchronization information table corresponding to the master control unit. For the slave output interface unit, the target distance is configured to the DistRegs [100], and 1 is written into the FwdEnbleRegs of the SyncCtrlstatRegs [100], so as to enable the output interface unit to forward the data packet for the deterministic flow outward.

For the slave output interface unit, the slave output interface unit may also update a sequence number in the SeqRegs [100] register based on the target distance in the DistRegs [100], namely, adding the sequence number in the SeqRegs [100] register to the target distance in the DistRegs [100], and then write the updated sequence number into the SeqRegs [100] register.

The master control unit updates a Sync identifier in the synchronization information table to indicate, by the Sync identifier, that the corresponding output interface unit has completed sequence number synchronization, and the sequence number synchronization processing flow can be ended.

If the Sync is 0, the output interface unit performs forwarding processing flow which includes the followings:
If the flow identifier in the metadata is 100 and the Sync is 0, the output interface unit reads a sequence number in the SeqRegs [100] register, where the sequence number in the SeqRegs [100] register is a current sequence number (i.e., a start sequence number); sets the sequence number in the SeqRegs [100] register to Value; updates the Value: Value = Value+1; and writes the value of the Value back to the SeqRegs [100] register. The output interface unit obtains a sequence number prefix, Prefix, from the metadata; generates a sequence number SeqNum=Value | (Prefix<<28); and based on the Offset obtained from the metadata, writes the SeqNum into a position indicated by the Offset in the data packet. If FwdEnableRegs of the SyncCtrlstatRegs [100] is 1, the output interface unit sends the data packet to a next module, otherwise discards the data packet.

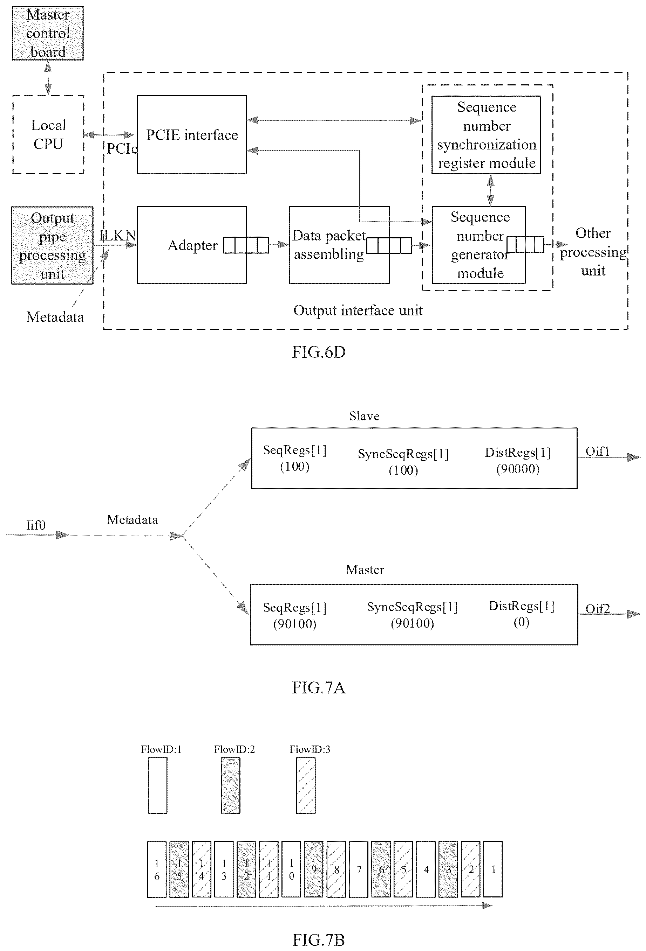

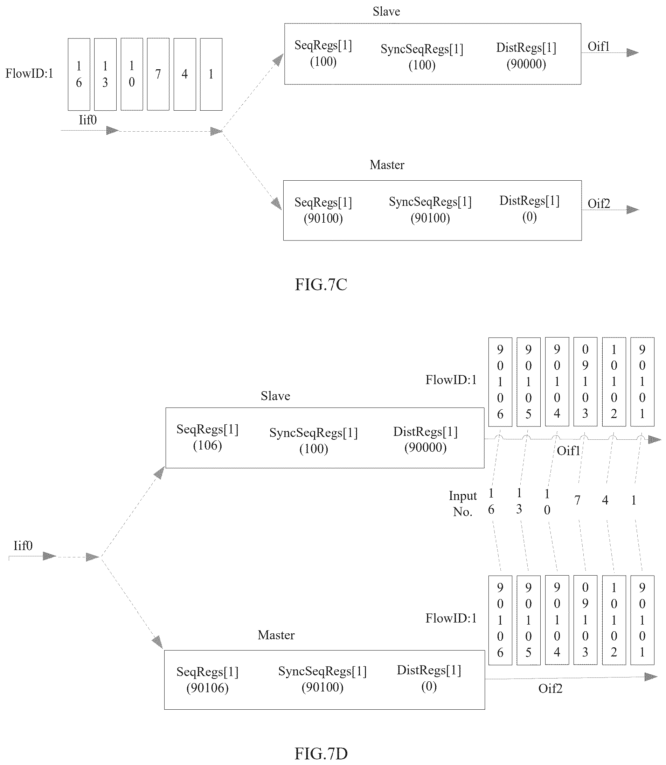

As shown in FIGS. 7A, 7B, 7C and 7D, they are schematic diagrams of sequence number synchronization of the output interface unit. Assuming that: a flow identifier (FlowID) of a deterministic flow mapped is 1, the deterministic flow is received from an interface 0 (Iif0) of the network device, and sent out from an interface 1 (Oifl) and an interface 2 (Oif2) of the network device.

As shown in FIG. 7A, it shows values of sequence number-related registers of the output interface units after synchronization is completed. For ease of descriptions, Oif1.SeqRegs [1] is used to represent SeqRegs with a flow identifier being 1 on the Oifl interface. Oif2 takes a master role. Since the master and slave roles are enabled at different time, the sequence numbers on the Oifl and Oif2 are different. Assuming that the value of Oif1.SeqRegs [1] is 100 at the time of synchronization completion, there is Oifl.SynSeqRegs[1] with a value of 100. Similarly, assuming that the value of Oif2.SeqRegs [1] is 90100, there is Oif2.SynSeqRegs[1] with a value of 90100. After processing, the master control unit obtains that the target difference Dist between the master sequence number and the slave sequence number is 90000, and thus, the value of Oifl.DistRegs[1] of the slave output interface unit is 90000 and the value of Oif2.DistRegs[1] of the master output interface unit is 0.

As shown in FIG. 7B, assuming that 16 data packets are received on the Iif0, for ease of descriptions, the received data packets are identified with input numbers (InputNo) being 1 to 16. The received data packets belong to three deterministic flows. There are 6 data packets with the flow identifier (FlowID) being 1, and their input numbers is 1, 4, 7, 10, 13, 16. If the input interface unit generates a sequence number for the data packets without performing flow identification, the sequence numbers in one deterministic flow are discontinuous (i.e., 1, 4, 7, 10, 13, 16 and the like). Because it is impossible to determine whether the passage the data packets with the FlowIDs being 2 and 3 pass through is same as the passage the data packets with the FlowID being 1 pass through, descriptions are made only with the data packets with the FlowID being 1 as an example.

As shown in FIG. 7C, it is an example of registers of the output interface units after the synchronization is completed and before the above 6 data packets (1, 4, 7, 10, 13, 16) arrive at the Oif12 and Oif2.

As shown in FIG. 7D, it is an example of identifying data packets with sequence numbers and processing and sending, by the output interface unit, the 6 data packets with generated sequence numbers from the Oif12 and Oif2. Obviously, the output interface units in master and slave roles generate a same sequence number for a same data packet. Since the sequence numbers are generated based on an arrival order of the data packets in the output interface unit, the sequence numbers are not sent out of order, and continuous sequence numbers are generated. The peer end can utilize these continuous sequence numbers to achieve relevant QoS guarantees.

It can be seen from the above technical solutions that, in the present disclosure, a method of generating a sequence number of a data packet of a deterministic flow in a deterministic network is provided, so as to ensure that the sequence number of the data packet of the master output interface unit is consistent with the sequence number of the data packet of the slave output interface unit, and thus ensure the consistency of the sequence numbers of the data packets during concurrent processing of the data packets. In other words, the sequence numbers of multiple data packets (i.e. several replicas) for the same deterministic flow are continuously arranged. And the continuously-arranged sequence numbers of the deterministic flow can ensure correct implementation of the DetNet. Based on full consideration of implementability and performance factors of software and hardware, the present disclosure has very high extendability and can be applied to large-scale deterministic network applications, and is also applicable to implementation in the routers of high, medium and low levels. The method can solve a problem during PREOF function implementation, where the problem is that the sequence number generation relies on flow identification, which requires high performance concurrent processing, and the concurrent processing may cause disorder, which further causes not possible to generate continuous sequence numbers identifying the order of the deterministic flows for multiple replicas of a same flow.

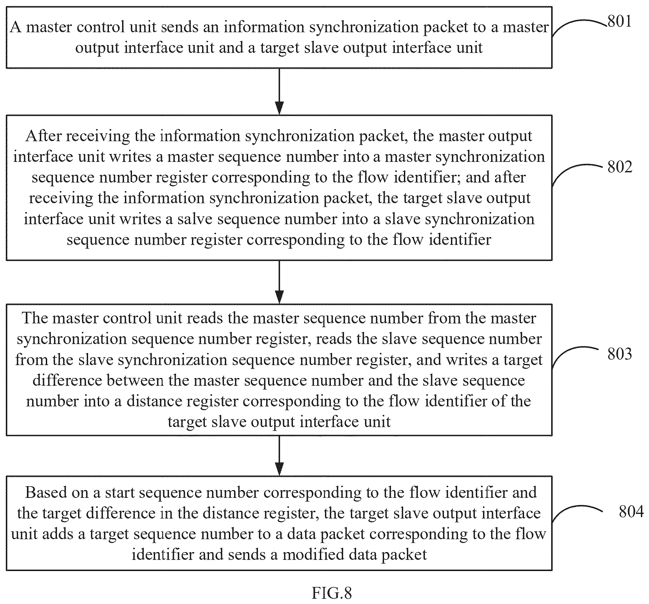

The present disclosure provides a data packet transmission method, which is applied to a network device. The network device includes a master control unit and at least two output interface units. The at least two output interface units includes one master output interface unit and at least one slave output interface unit. As shown in FIG. 8, it is a flowchart of the method. The method includes the following steps:
At step 801, the master control unit sends an information synchronization packet to the master output interface unit and a target slave output interface unit, where the information synchronization packet includes a flow identifier of a deterministic flow.
At step 802, after receiving the information synchronization packet, the master output interface unit writes a master sequence number into a master synchronization sequence number register corresponding to the flow identifier, where the master sequence number is a sequence number of a last data packet received by the master output interface unit; and after receiving the information synchronization packet, the target slave output interface unit writes a salve sequence number into a slave synchronization sequence number register corresponding to the flow identifier, where the slave sequence number is a sequence number of a last data packet received by the target slave output interface unit.
At step 803, the master control unit reads the master sequence number from the master synchronization sequence number register, reads the slave sequence number from the slave synchronization sequence number register, and writes a target difference between the master sequence number and the slave sequence number into a distance register corresponding to the flow identifier of the target slave output interface unit.
At step 804, based on a start sequence number corresponding to the flow identifier and the target difference in the distance register, the target slave output interface unit adds a target sequence number to a data packet corresponding to the flow identifier and sends a modified data packet, where the start sequence number is a sequence number of a last data packet received by the target slave output interface unit.

In one example, after writing the master sequence number into the master synchronization sequence number register, the master output interface unit modifies a master control state register corresponding to the flow identifier from a first value to a second value, where the first value represents synchronization information preparation is not completed, and the second value represents the synchronization information preparation is completed. After writing the salve sequence number into the slave synchronization sequence number register, the target slave output interface unit modifies a slave control state register corresponding to the flow identifier from the first value to the second value. The master control unit reads the master sequence number from the master synchronization sequence number register, and reads the slave sequence number from the slave synchronization sequence number register include: if the master control state register and the slave control state register are the second value, reads the master sequence number from the master synchronization sequence number register, and reads the slave sequence number from the slave synchronization sequence number register. After writing the target difference into the distance register, the master control unit modifies the master control state register corresponding to the flow identifier from the second value to the first value, and modifies the slave control state register corresponding to the flow identifier from the second value to the first value.

In one example, after modifying the master control state register corresponding to the flow identifier to the second value, the master output interface unit sends a master interruption event message carrying the flow identifier to the master control unit; after modifying the slave control state register corresponding to the flow identifier to the second value, the target slave output interface unit sends a slave interruption event message carrying the flow identifier to the master control unit; after receiving the master interruption event message, the master control unit checks whether the master control state register corresponding to the flow identifier is the second value; and if the master control state register is the second value, the master control unit reads the master sequence number from the master synchronization sequence number register; after receiving the slave interruption event message, the master control unit checks whether the slave control state register corresponding to the flow identifier is the second value; and if the slave control state register is the second value, the master control unit reads the slave sequence number from the slave synchronization sequence number register.

In one example, after reading the target difference from the distance register, the target slave output interface unit modifies a forwarding control register corresponding to the flow identifier from a third value to a fourth value, where the third value represents a blocking state, and the fourth value represents a forwarding state; or, after writing the target difference into the distance register, the master control unit modifies the forwarding control register corresponding to the flow identifier, of the target slave output interface unit from the third value to the fourth value. When the forwarding control register is the third value, each time the target slave output interface unit receives a data packet corresponding to the flow identifier, the target slave output interface unit updates the slave sequence number corresponding to the flow identifier and prohibits sending the data packet. Sending, by the target slave output interface unit, the modified data packet includes: when the forwarding control register is the fourth value, sending, by the target slave output interface unit, the modified data packet.

In one example, sending, by the master control unit, the information synchronization packet to the master output interface unit and the target slave output interface unit includes: when a deterministic flow is newly established, obtaining, by the master control unit, a master output interface unit and a target slave output interface unit corresponding to the newly-established deterministic flow, and sending the information synchronization packet to the master output interface unit and the target slave output interface unit, where the information synchronization packet includes a flow identifier of the newly-established deterministic flow; or, for a deterministic flow, if the master output interface unit corresponding to the deterministic flow fails, electing, by the master control unit, a new master output interface unit from all slave output interface units, taking remaining slave output interface units other than the new master output interface unit as the target slave output interface units, and sending the information synchronization packet to the newly-elected master output interface unit and the target slave output interface units; or, for a deterministic flow, if the slave output interface unit corresponding to the deterministic flow is added, taking the newly-added slave output interface unit as the target slave output interface unit, and sending, by the master control unit, the information synchronization packet to the master output interface unit and the target slave output interface units respectively; or, for a deterministic flow, if the slave output interface unit corresponding to the deterministic flow recovers from failure, taking the recovered slave output interface unit as the target slave output interface unit, and sending, by the master control unit, the information synchronization packet to the master output interface unit and the target slave output interface units respectively; or, for a deterministic flow, obtaining, by the master control unit, a synchronization period of the deterministic flow, and based on the synchronization period, sending the information synchronization packet to the master output interface unit and the target slave output interface units respectively.

In one example, the network device further includes an input interface unit, an input pipe processing unit, an exchange unit, and an output pipe processing unit; and where sending, by the master control unit, the information synchronization packet to the master output interface unit and the target slave output interface unit respectively includes: sending, by the master control unit, the information synchronization packet to the input interface unit; sending, by the input interface unit, the information synchronization packet to the input pipe processing unit; sending, by the input pipe processing unit, the information synchronization packet to the exchange unit; sending, by the exchange unit, the information synchronization packet to an output pipe processing unit corresponding to the master output interface unit, and sending, by this output pipe processing unit, the information synchronization packet to the master output interface unit; and, sending the information synchronization packet to an output pipe processing unit corresponding to the target slave output interface unit, and sending, by this output pipe processing unit, the information synchronization packet to the target slave output interface unit.

**In** one example, the network device further includes an input interface unit, an input pipe processing unit, an exchange unit, and an output pipe processing unit; on this basis, the method further includes: receiving, by the input interface unit, multiple data packets, and based on a reception order of the multiple data packets, adding an auxiliary identifier for each data packet, where the auxiliary identifier of a latter data packet is greater than the auxiliary identifier of a previous data packet; based on an ascending order of the auxiliary identifiers, sending each data packet one after another to the input pipe processing unit; receiving, by the input pipe processing unit, the multiple data packets, sorting the multiple data packets based on the ascending order of the auxiliary identifiers, and removing the auxiliary identifier in each data packet; traversing each data packet in order, and for the currently-traversed data packet, determining a flow identifier of a deterministic flow to which the data packet belongs, and encapsulating the flow identifiers into the data packet and sending the data packet to the exchange unit; receiving, by the exchange unit, the data packet, and sending the data packet to an output pipe processing unit corresponding to the master output interface unit, such that this output pipe processing unit sends the data packet to the master output interface unit; and, sending the data packet to an output pipe processing unit corresponding to the target slave output interface unit such that this output pipe processing unit sends the data packet to the target slave output interface unit; receiving, by the master output interface unit, the data packet, and based on a start sequence number corresponding to the flow identifier, adding a target sequence number to the data packet, removing the flow identifier in the data packet, and sending the modified data packet; receiving, by the target slave output interface unit, the data packet, and based on a start sequence number corresponding to the flow identifier and the target difference in the distance register, adding a target sequence number to the data packet, removing the flow identifier in the data packet and sending the modified data packet.

In one example, based on the start sequence number corresponding to the flow identifier and the target difference in the distance register, adding, by the target slave output interface unit, the target sequence number to the data packet includes: reading, by the target slave output interface unit, the target difference from the distance register, determining a sum value of the start sequence number corresponding to the flow identifier and the target difference, and updating the sum value to the start sequence number corresponding to the flow identifier; after the start sequence number is updated, each time the target slave output interface unit receives a data packet, generating, by the target slave output interface unit, the target sequence number of the data packet based on the start sequence number, adding the target sequence number to the data packet, and updating the target sequence number to the start sequence number corresponding to the flow identifier; or, generating, by the target slave output interface unit, a candidate sequence number corresponding to the data packet based on the start sequence number corresponding to the flow identifier, updating the candidate sequence number to the start sequence number corresponding to the flow identifier, and based on the candidate sequence number, and the target difference in the distance register, generating the target sequence number of the data packet, and adding the target sequence number to the data packet.

In one example, the target slave output interface unit may further obtain a sequence number bit width, a sequence number prefix and a sequence number position, where the sequence number bit width, the sequence number prefix and the sequence number position are encapsulated in the data packet by the input pipe processing unit, or the sequence number bit width, the sequence number prefix and the sequence number position are sent to the target slave output interface unit by the master control unit; when the target slave output interface unit generates the target sequence number of the data packet based on the start sequence number, a bit width of the target sequence number is the sequence number bit width, the prefix of the target sequence number is the sequence number prefix, and the target sequence number is greater than the start sequence number; when the target slave output interface unit generates the candidate sequence number corresponding to the data packet based on the start sequence number corresponding to the flow identifier, a bit width of the candidate sequence number is the sequence number bit width, the prefix of the candidate sequence number is the sequence number prefix, and the candidate sequence number is greater than the start sequence number; and where adding, by the target slave output interface unit, the target sequence number to the data packet includes: adding, by the target slave output interface unit, the target sequence number to the data packet based on the sequence number position, where an offset position of the target sequence number in the data packet is the sequence number position.

It can be seen from the above technical solution that in one example, a method of generating a sequence number of a data packet of a deterministic flow in a deterministic network is provided so as to ensure that the sequence number of the data packet of the master output interface unit is consistent with the sequence number of the data packet of the slave output interface unit and thus ensure the sequence number consistency of the data packets during concurrent processing of the data packets, in other words, the sequence numbers of multiple data packets (i.e. several replicas) for the same deterministic flow are continuously arranged. And of a same deterministic flow, the continuously-arranged sequence numbers of the deterministic flow can ensure correct implementation of the DetNet.

The above are merely the embodiments of the present disclosure and not used to limit the present disclosure. Those skilled in the arts can make various changes and modifications to the present disclosure. Any changes, equivalent substitutions and improvements and the like made within the spirit and principle of the present disclosure shall fall within the scope of protection of the claims of the present disclosure.

## Claims

1. A data packet transmission method, applied to a network device, the network device comprising a master control unit and at least two output interface units, and the at least two output interface units comprising one master output interface unit and at least one slave output interface unit, wherein the method comprises:
sending, by the master control unit, an information synchronization packet to the master output interface unit and a target slave output interface unit, wherein the information synchronization packet comprises a flow identifier of a deterministic flow;
after receiving the information synchronization packet, writing, by the master output interface unit, a master sequence number into a master synchronization sequence number register corresponding to the flow identifier, wherein the master sequence number is a sequence number of a last data packet received by the master output interface unit;
after receiving the information synchronization packet, writing, by the target slave output interface unit, a salve sequence number into a slave synchronization sequence number register corresponding to the flow identifier, wherein the slave sequence number is a sequence number of a last data packet received by the target slave output interface unit;
reading, by the master control unit, the master sequence number from the master synchronization sequence number register, reading the slave sequence number from the slave synchronization sequence number register, and writing a target difference between the master sequence number and the slave sequence number into a distance register corresponding to the flow identifier of the target slave output interface unit;
based on a start sequence number corresponding to the flow identifier and the target difference in the distance register, adding, by the target slave output interface unit, a target sequence number to a data packet corresponding to the flow identifier, and sending a modified data packet, wherein the start sequence number is a sequence number of a received last data packet.

2. The method of claim 1, wherein,
the method further comprises: after writing the master sequence number into the master synchronization sequence number register, modifying, by the master output interface unit, a master control state register corresponding to the flow identifier from a first value to a second value, wherein the first value represents synchronization information preparation is not completed, and the second value represents the synchronization information preparation is completed; and after writing the salve sequence number into the slave synchronization sequence number register, modifying, by the target slave output interface unit, a slave control state register corresponding to the flow identifier from the first value to the second value;
reading, by the master control unit, the master sequence number from the master synchronization sequence number register, and reading the slave sequence number from the slave synchronization sequence number register comprise: when the master control state register and the slave control state register are the second value, reading the master sequence number from the master synchronization sequence number register, and reading the slave sequence number from the slave synchronization sequence number register; and
the method further comprises: after writing the target difference into the distance register, modifying, by the master control unit, the master control state register corresponding to the flow identifier from the second value to the first value, and modifying the slave control state register corresponding to the flow identifier from the second value to the first value.

3. The method of claim 2, further comprising:
after modifying the master control state register corresponding to the flow identifier to the second value, sending, by the master output interface unit, a master interruption event message carrying the flow identifier to the master control unit;
after modifying the slave control state register corresponding to the flow identifier to the second value, sending, by the target slave output interface unit, a slave interruption event message carrying the flow identifier to the master control unit;
after receiving the master interruption event message, checking, by the master control unit, whether the master control state register corresponding to the flow identifier is the second value; and when the master control state register is the second value, reading the master sequence number from the master synchronization sequence number register;
after receiving the slave interruption event message, checking, by the master control unit, whether the slave control state register corresponding to the flow identifier is the second value; and when the slave control state register is the second value, reading the slave sequence number from the slave synchronization sequence number register.

4. The method of claim 1, wherein,
the method further comprises: after reading the target difference from the distance register, modifying, by the target slave output interface unit, a forwarding control register corresponding to the flow identifier from a third value to a fourth value, wherein the third value represents a blocking state, and the fourth value represents a forwarding state; or, after writing the target difference into the distance register, modifying, by the master control unit, the forwarding control register corresponding to the flow identifier of the target slave output interface unit from the third value to the fourth value;
wherein when the forwarding control register is the third value, each time the target slave output interface unit receives a data packet corresponding to the flow identifier, the target slave output interface unit updates the slave sequence number corresponding to the flow identifier and prohibits sending the data packet; and
wherein sending, by the target slave output interface unit, the modified data packet comprises: when the forwarding control register is the fourth value, sending, by the target slave output interface unit, the modified data packet.

5. The method of any one of claims 1 to 4, wherein sending, by the master control unit, the information synchronization packet to the master output interface unit and the target slave output interface unit comprises:
when a deterministic flow is newly established, obtaining, by the master control unit, a master output interface unit and a target slave output interface unit corresponding to a newly-established deterministic flow, and sending the information synchronization packet to the master output interface unit and the target slave output interface unit, wherein the information synchronization packet comprises a flow identifier of the newly-established deterministic flow; or,
for a deterministic flow, when a master output interface unit corresponding to the deterministic flow fails, electing, by the master control unit, a new master output interface unit from all slave output interface units, taking remaining slave output interface units other than the new master output interface unit as the target slave output interface units, and sending the information synchronization packet to the newly-elected master output interface unit and the target slave output interface units; or,
for a deterministic flow, when a slave output interface unit corresponding to the deterministic flow is added, taking the newly-added slave output interface unit as the target slave output interface unit, and sending, by the master control unit, the information synchronization packet to the master output interface unit and the target slave output interface units; or,
for a deterministic flow, when a slave output interface unit corresponding to the deterministic flow recovers from failure, taking the recovered slave output interface unit as the target slave output interface unit, and sending, by the master control unit, the information synchronization packet to the master output interface unit and the target slave output interface units; or,
for a deterministic flow, obtaining, by the master control unit, a synchronization period of the deterministic flow, and based on the synchronization period, sending the information synchronization packet to the master output interface unit and the target slave output interface units.

6. The method of any one of claims 1 to 4, wherein the network device further comprises an input interface unit, an input pipe processing unit, an exchange unit, and output pipe processing units; and wherein sending, by the master control unit, the information synchronization packet to the master output interface unit and the target slave output interface unit comprises:
sending, by the master control unit, the information synchronization packet to the input interface unit;
sending, by the input interface unit, the information synchronization packet to the input pipe processing unit;
sending, by the input pipe processing unit, the information synchronization packet to the exchange unit;
sending, by the exchange unit, the information synchronization packet to an output pipe processing unit corresponding to the master output interface unit, and sending, by this output pipe processing unit, the information synchronization packet to the master output interface unit; and,
sending the information synchronization packet to an output pipe processing unit corresponding to the target slave output interface unit, and sending, by this output pipe processing unit, the information synchronization packet to the target slave output interface unit.

7. The method of any one of claims 1 to 4, wherein the network device further comprises an input interface unit, an input pipe processing unit, an exchange unit, and output pipe processing units;
the input interface unit receives a plurality of data packets, and based on a reception order of the plurality of data packets, adds an auxiliary identifier for each data packet, wherein the auxiliary identifier of a latter data packet is greater than the auxiliary identifier of a previous data packet; and the input interface unit, based on an ascending order of the auxiliary identifiers, sends each data packet one after another to the input pipe processing unit;
the input pipe processing unit receives the plurality of data packets, sorts the plurality of data packets based on the ascending order of the auxiliary identifiers, and removes the auxiliary identifier in each data packet; and the input pipe processing unit traverses each data packet in order, and for a currently-traversed data packet, determines a flow identifier of a deterministic flow to which the data packet belongs, encapsulates the flow identifiers into the data packet and sends the data packet to the exchange unit;
the exchange unit receives the data packet, and sends the data packet to an output pipe processing unit corresponding to the master output interface unit, such that this output pipe processing unit sends the data packet to the master output interface unit; and the exchange unit sends the data packet to an output pipe processing unit corresponding to the target slave output interface unit, such that this output pipe processing unit sends the data packet to the target slave output interface unit;
the master output interface unit receives the data packet, and based on a start sequence number corresponding to the flow identifier, adds a target sequence number to the data packet, removes the flow identifier in the data packet, and sends a modified data packet; and
the target slave output interface unit receives the data packet, and based on a start sequence number corresponding to the flow identifier and the target difference in the distance register, adds a target sequence number to the data packet, removes the flow identifier in the data packet, and sends a modified data packet.

8. The method of claim 7, wherein based on the start sequence number corresponding to the flow identifier and the target difference in the distance register, adding, by the target slave output interface unit, the target sequence number to the data packet comprises:
reading, by the target slave output interface unit, the target difference from the distance register, determining a sum value of the start sequence number corresponding to the flow identifier and the target difference, and updating the sum value to the start sequence number corresponding to the flow identifier; after updating the start sequence number, each time the target slave output interface unit receives a data packet, generating, by the target slave output interface unit, the target sequence number of the data packet based on the start sequence number, adding the target sequence number to the data packet, and updating the target sequence number to the start sequence number corresponding to the flow identifier; or,
generating, by the target slave output interface unit, a candidate sequence number corresponding to the data packet based on the start sequence number corresponding to the flow identifier, updating the candidate sequence number to the start sequence number corresponding to the flow identifier, based on the candidate sequence number and the target difference in the distance register, generating the target sequence number of the data packet, and adding the target sequence number to the data packet.

9. The method of claim 8, wherein
the method further comprises: obtaining, by the target slave output interface unit, a sequence number bit width, a sequence number prefix and a sequence number position, wherein the sequence number bit width, the sequence number prefix and the sequence number position are encapsulated in the data packet by the input pipe processing unit, or the sequence number bit width, the sequence number prefix and the sequence number position are sent to the target slave output interface unit by the master control unit;
when the target slave output interface unit generates the target sequence number of the data packet based on the start sequence number, a bit width of the target sequence number is the sequence number bit width, a prefix of the target sequence number is the sequence number prefix, and the target sequence number is greater than the start sequence number;
when the target slave output interface unit generates the candidate sequence number corresponding to the data packet based on the start sequence number corresponding to the flow identifier, a bit width of the candidate sequence number is the sequence number bit width, a prefix of the candidate sequence number is the sequence number prefix, and the candidate sequence number is greater than the start sequence number; and
wherein adding, by the target slave output interface unit, the target sequence number to the data packet comprises: adding, by the target slave output interface unit, the target sequence number to the data packet based on the sequence number position, wherein an offset position of the target sequence number in the data packet is the sequence number position.

10. A network device, comprising a master control unit and at least two output interface units, and the at least two output interface units comprising one master output interface unit and at least one slave output interface unit;
the master control unit is configured to send an information synchronization packet to the master output interface unit and a target slave output interface unit, wherein the information synchronization packet comprises a flow identifier of a deterministic flow;
the master output interface unit is configured to, after receiving the information synchronization packet, write a master sequence number into a master synchronization sequence number register corresponding to the flow identifier, wherein the master sequence number is a sequence number of a last data packet received by the master output interface unit;
the target slave output interface unit is configured to, after receiving the information synchronization packet, write a salve sequence number into a slave synchronization sequence number register corresponding to the flow identifier, wherein the slave sequence number is a sequence number of a last data packet received by the target slave output interface unit;
the master control unit is configured to read the master sequence number from the master synchronization sequence number register, read the slave sequence number from the slave synchronization sequence number register, and write a target difference between the master sequence number and the slave sequence number into a distance register corresponding to the flow identifier of the target slave output interface unit;
the target slave output interface unit is configured to, based on a start sequence number corresponding to the flow identifier and the target difference in the distance register, add a target sequence number to a data packet corresponding to the flow identifier, and send a modified data packet, wherein the start sequence number is a sequence number of a received last data packet.

11. The network device of claim 10, wherein
the master output interface unit is further configured to, after writing the master sequence number into the master synchronization sequence number register, modify a master control state register corresponding to the flow identifier from a first value to a second value, wherein the first value represents synchronization information preparation is not completed, and the second value represents the synchronization information preparation is completed; and, the target slave output interface unit is further configured to, after writing the salve sequence number into the slave synchronization sequence number register, modify a slave control state register corresponding to the flow identifier from the first value to second value;
when reading the master sequence number from the master synchronization sequence number register, and reading the slave sequence number from the slave synchronization sequence number register, the master control unit is specifically configured to: when the master control state register and the slave control state register are the second value, reading the master sequence number from the master synchronization sequence number register, and reading the slave sequence number from the slave synchronization sequence number register; and
the master control unit is further configured to, after writing the target difference into the distance register, modify the master control state register corresponding to the flow identifier from the second value to the first value, and modify the slave control state register corresponding to the flow identifier from the second value to the first value.

12. The network device of claim 11, wherein
the master output interface unit is further configured to, after modifying the master control state register corresponding to the flow identifier to the second value, send a master interruption event message carrying the flow identifier to the master control unit;
the target slave output interface unit is further configured to, after modifying the slave control state register corresponding to the flow identifier to the second value, send a slave interruption event message carrying the flow identifier to the master control unit;
the master control unit is further configured to, after receiving the master interruption event message, check whether the master control state register corresponding to the flow identifier is the second value; and when the master control state register is the second value, read the master sequence number from the master synchronization sequence number register;
the master control unit is further configured to, after receiving the slave interruption event message, check whether the slave control state register corresponding to the flow identifier is the second value; and when the slave control state register is the second value, read the slave sequence number from the slave synchronization sequence number register.

13. The network device of claim 10, wherein,
the target slave output interface unit is further configured to, after reading the target difference from the distance register, modify a forwarding control register corresponding to the flow identifier from a third value to a fourth value, wherein the third value represents a blocking state, and the fourth value represents a forwarding state; or, the master control unit is further configured to, after writing the target difference into the distance register, modify the forwarding control register corresponding to the flow identifier, of the target slave output interface unit from the third value to the fourth value; and
the target slave output interface unit is further configured to, when the forwarding control register is the third value, each time the target slave output interface unit receives a data packet corresponding to the flow identifier, the target slave output interface unit updates the slave sequence number corresponding to the flow identifier and prohibits sending the data packet; and when sending the modified data packet, the target slave output interface unit is specifically configured to: when the forwarding control register is the fourth value, send the modified data packet.

14. The network device of any one of claims 10 to 13, wherein, the network device further comprises an input interface unit, an input pipe processing unit, an exchange unit, and output pipe processing units;
the input interface unit is configured to receive a plurality of data packets, and based on a reception order of the plurality of data packets, add an auxiliary identifier for each data packet, wherein the auxiliary identifier of a latter data packet is greater than the auxiliary identifier of a previous data packet; and based on an ascending order of the auxiliary identifiers, send each data packet one after another to the input pipe processing unit;
the input pipe processing unit is configured to receive the plurality of data packets, sort the plurality of data packets based on the ascending order of the auxiliary identifiers, and remove the auxiliary identifier in each data packet; and traverse each data packet in order, and for a currently-traversed data packet, determine a flow identifier of a deterministic flow to which the data packet belongs, encapsulate the flow identifiers into the data packet and send the data packet to the exchange unit;
the exchange unit is configured to receive the data packet, and send the data packet to an output pipe processing unit corresponding to the master output interface unit, such that this output pipe processing unit sends the data packet to the master output interface unit; and the exchange unit is further configured to send the data packet to an output pipe processing unit corresponding to the target slave output interface unit, such that this output pipe processing unit sends the data packet to the target slave output interface unit; and
the master output interface unit is configured to receive the data packet, and based on a start sequence number corresponding to the flow identifier, add a target sequence number to the data packet, remove the flow identifier in the data packet, and send a modified data packet; the target slave output interface unit is configured to receive the data packet, and based on a start sequence number corresponding to the flow identifier and the target difference in the distance register, add a target sequence number to the data packet, remove the flow identifier in the data packet and send a modified data packet.

15. The network device of claim 14, wherein
when based on the start sequence number corresponding to the flow identifier and the target difference in the distance register, adding the target sequence number to the data packet, the target slave output interface unit is specifically configured to:
read the target difference from the distance register, determine a sum value of the start sequence number corresponding to the flow identifier and the target difference, and update the sum value to the start sequence number corresponding to the flow identifier; after updating the start sequence number, each time the target slave output interface unit receives a data packet, generate the target sequence number of the data packet based on the start sequence number, add the target sequence number to the data packet, and update the target sequence number to the start sequence number corresponding to the flow identifier; or, generate a candidate sequence number corresponding to the data packet based on the start sequence number corresponding to the flow identifier, update the candidate sequence number to the start sequence number corresponding to the flow identifier, based on the candidate sequence number and the target difference in the distance register, generate the target sequence number of the data packet, and add the target sequence number to the data packet.
